# EUROPÄISCHE PATENTANMELDUNG

(11) **EP 1 316 472 A1**
(43) Veröffentlichungstag der Anmeldung: **04.06.2003**
(21) Anmeldenummer: 02025154.2
(22) Anmeldetag: 09.11.2002
(51) Int. Cl.: B60N 3/10

(54) **Halter für einen Getränkebehälter**

(30) Priorität: 28.11.2001 DE 10158373
(71) Anmelder: fischer automotive systems GmbH, 72160 Horb a.N. (DE)
(72) Erfinder: Kaupp, Klaus, 72178 Waldachtal (DE)

(57) **Zusammenfassung**

Die Erfindung betrifft einen Halter (10) für einen Getränkebehälter (66), der zum Einbau in einen Kraftwagen vorgesehen ist. Die Erfindung schlägt vor, den Halter (10) mit Haltearmen (22, 24) auszubilden, die den Getränkebehälter (66) seitlich umgreifen und die zur Anpassung an einen Durchmesser des Getränkebehälters (66) in seitlicher Richtung und zur Anpassung an eine Höhe des Getränkebehälters (66) nach oben und unten schwenkbar sind.

## Beschreibung

Die Erfindung betrifft einen Halter für einen Getränkebehälter mit den Merkmalen des Oberbegriffs des Anspruchs 1. Der Halter ist zum Einbau in ein Fortbewegungsmittel, insbesondere in einen Kraftwagen, vorgesehen. Unter Getränkebehälter ist beispielsweise eine Getränkedose, ein Becher oder eine Tasse zu verstehen.

Derartige Halter sind in einer Vielzahl unterschiedlicher Ausgestaltungen bekannt. Bekannte Halter weisen eine Einstellöffnung auf, in die der Getränkebehälter einstellbar ist. Zur Anpassung an unterschiedliche Durchmesser von Getränkebehältern sind Ausgleichsklappen bekannt, die schwenkbar an einem Rand der Einstellöffnung angeordnet sind und federbeaufschlagt in die Einstellöffnung hineingedrückt werden. Beim Einstellen drückt der Getränkebehälter die Ausgleichsklappe so weit zur Seite wie es seinem Durchmesser entspricht.

Der Erfindung liegt die Aufgabe zugrunde, einen Halter für einen Getränkebehälter vorzuschlagen, bei dem die Größe der Einstellöffnung einstellbar ist.

Diese Aufgabe wird erfindungsgemäß durch die Merkmale des Anspruchs 1 gelöst. Der erfindungsgemäße Halter weist zwei Haltearme auf, die beispielsweise sichelförmig gestaltet sein können und die eine Einstellöffnung für den Getränkebehälter seitlich umgreifen. Dabei muss die Einstellöffnung nicht auf einem vollen Umfang umgriffen sein, es genügt, dass die Haltearme einen eingestellten Getränkebehälter so umgreifen, dass er kippsicher zwischen den Haltearmen gehalten ist. Die Haltearme sind zangenartig um Schwenkachsen gelagert, sie sind in seitlicher Richtung schwenkbar. Dabei bedeutet in seitlicher Richtung schwenkbar, dass sich eine Größe der Einstellöffnung, insbesondere ihr Durchmesser beim Schwenken der Haltearme ändert. Die beiden Haltearme können auch eine gemeinsame Schwenkachse aufweisen. Erfindungsgemäß weist der Halter einen Einsteller für die Größe der Einstellöffnung auf. Der Einsteller greift mit Abstand von den Schwenkachsen der Haltearme an den Haltearmen an, er hält einen Abstand der Haltearme voneinander an den Angriffsstellen konstant. Angriffsstellen sind die Stellen, an denen der Einsteller an den Haltearmen angreift. Der Abstand des Einstellers von den Schwenkachsen der Haltearme ist beispielsweise durch Verschieben des Einstellers einstellbar. Durch Veränderung des Abstands des Einstellers, der die Haltearme an den Angriffsstellen in konstantem Abstand voneinander hält, werden die Haltearme wie Backen einer Zange auseinander oder zusammen geschwenkt. Durch das Verschwenken der Haltearme wird die Größe der Einstellöffnung verändert und eingestellt.

Die Erfindung hat den Vorteil, dass die Größe der Einstellöffnung an einen einzustellenden Getränkebehälter anpassbar ist. Dabei ist ein großer Größen-Einstellbereich möglich. Weiterer Vorteil ist die Einstellbarkeit von Henkeltassen in den erfindungsgemäßen Halter, sofern die Haltearme die Einstellöffnung nicht vollständig umschließen.

Der Einsteller kann beispielsweise nach Art einer Klammer an Rändern der Haltearme angreifen oder beispielsweise mit Zapfen, Kulissensteinen oder dgl. verschiebbar in Nuten, Schlitze, Kulissenbahnen oder dgl. der Haltearme eingreifen, um deren Abstand voneinander an den Angriffsstellen konstant zu halten. Eine Ausgestaltung der Erfindung sieht zwei einander zugewandte Steuerflächen der Haltearme vor, deren Abstand voneinander sich in Richtung der Schwenkachsen beispielsweise keilförmig ändert. Zwischen den Steuerflächen ist der Einsteller angeordnet. Ein Federelement drückt die Haltearme mit den Steuerflächen gegen den Einsteller. Beim Bewegen des Einstellers in Längsrichtung des Spalts zwischen den Steuerflächen verschwenkt der Einsteller die an ihm anliegenden Haltearme und verändert dabei die Größe der Einstellöffnung. Wenn das oder die Federelemente die Haltearme nach innen, also im Sinne einer kleiner werdenden Einstellöffnung beaufschlagen, hat dies den Vorteil, dass die Einstellöffnung etwas kleiner als der einzustellende Getränkebehälter eingestellt werden kann. Beim Einstellen drückt der Getränkebehälter die Haltearme gegen die Kraft des Federelements etwas auseinander und ist mit Vorspannung in der Einstellöffnung zwischen den Haltearmen gehalten. Grundsätzlich ist das Prinzip auch umgekehrt ausführbar, so dass das Federelement die Haltearme nach außen beaufschlagt und die Halteelemente vom Einsteller gegen ein nach außen Schwenken gehalten werden.

Zur Anpassung an unterschiedlich hohe Getränkebehälter sieht eine Ausgestaltung der Erfindung eine Höhenverstellung für die Haltearme vor. Die Höhenverstellung wird bei einer Ausgestaltung der Erfindung dadurch erreicht, dass die Haltearme um eine horizontale Schwenkachse schwenkbar sind.

Die Erfindung wird nachfolgend anhand eines in der Zeichnung dargestellten Ausführungsbeispiels näher erläutert. Es zeigen:
- Figur 1: Einzelteile eines erfindungsgemäßen Halters in Explosionsdarstellung;
- Figur 2: den Halter aus Figur 1 in zusammengebautem Zustand; und
- Figuren 3 - 5: den Halter aus Figur 2 in unterschiedlichen Stellungen mit verschieden großen Getränkebehältern.

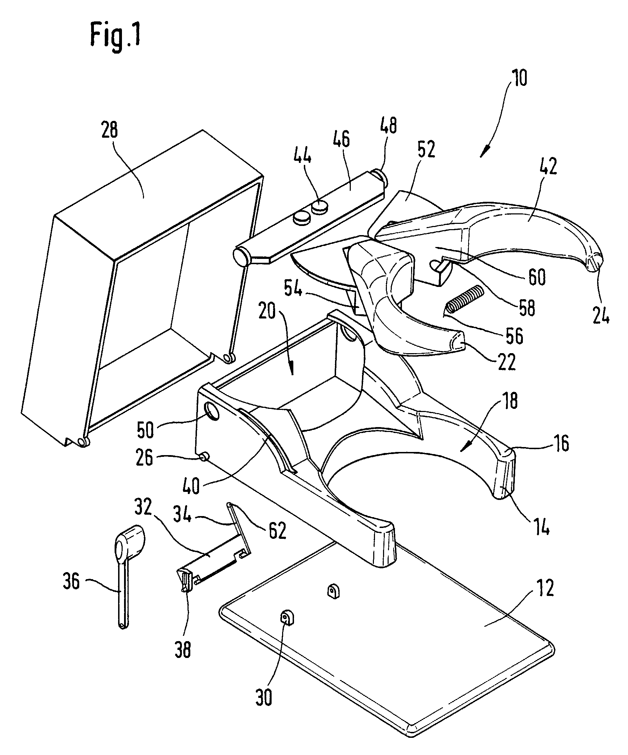

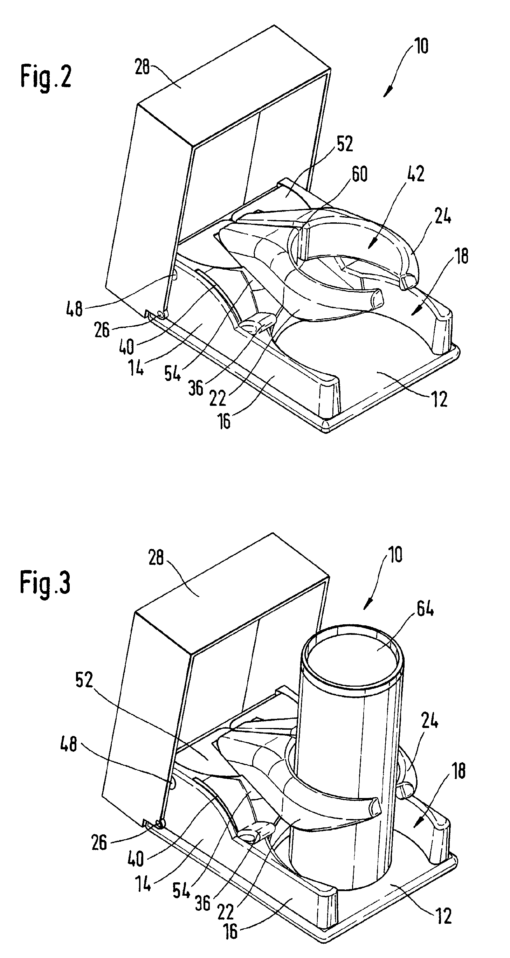

Der in Figuren 1 und 2 dargestellte erfindungsgemäße Halter 10 für einen Getränkebehälter wie beispielsweise eine Getränkedose, einen Becher oder eine Tasse ist zum Einbau in einen nicht dargestellten Kraftwagen oder auch ein sonstiges Fortbewegungsmittel vorgesehen. Der Halter 10 weist eine in Draufsicht rechteckige Grundplatte 12 auf, auf die ein Grundteil 14 fest aufgesetzt wird. Das Grundteil 14 ist bei zusammengebautem Halter 10 fest und vorzugsweise unlösbar beispielsweise durch Kleben oder Kunststoffschweißen mit der Grundplatte 12 verbunden. Das Grundteil 14 weist zwei starre Arme 16 auf, die einen kreisförmigen Freiraum zwischen sich umschließen, der einen unteren Teil einer Einstellöffnung 18 des Halters 10 bildet. Die Arme 16 umschließen die Einstellöffnung 18 auf ungefähr einem Dreiviertelkreis.

Seitlich der Einstellöffnung 18 weist das Grundteil 14 eine Ausnehmung 20 für zwei Haltearme 22, 24 auf. Die Ausnehmung 20 ist nach oben und zur Einstellöffnung 18 hin offen.

An seitlich abstehenden Zapfen 26 ist ein schachtelförmiger Klappdeckel 28 des Halters 10 schwenkbar gelagert.

Auf einer Oberseite der Grundplatte 12 sind zwei Lagerböcke 30 angeordnet, in denen ein Einsteller 32 schwenkbar gelagert ist. Der Einsteller 32 weist einen von der Grundplatte 12 nach oben gerichteten Kugelzapfen 34 auf. Mit dem Einsteller 32 ist ein Bedienhebel 36 über eine Radialrippe 38 drehfest verbunden. Der Einsteller 32 und der Bedienhebel 36 sind aus Montagegründen zweiteilig, sie können grundsätzlich auch einstückig miteinander sein. Der Bedienhebel 36 steht durch einen Schlitz 40 aus einer Seite des Grundteils 14 nach oben vor. Der Einsteller 32 befindet sich bei zusammengebautem Halter 10 unter dem Grundteil 14 und den Haltearmen 22, 24.

Die beiden Haltearme 22, 24 sind in Draufsicht sichelförmig und spiegelbildlich zueinander, sie umgreifen einen oberen Teil einer Einstellöffnung 42 des Halters 10. Dabei umgreift jeder der beiden Haltearme 22, 24 die Einstellöffnung 42 an einander gegenüberliegenden Stellen auf jeweils etwas weniger als einem Halbkreisbogen. Der von den Haltearmen 22, 24 umschlossene obere Teil der Einstellöffnung 42 befindet sich ungefähr gleichachsig oberhalb dem von den starren Armen 16 des Grundteils 14 umschlossenen unteren Teil der Einstellöffnung 18.

Mit Abstand von der Einstellöffnung 42 sind die Haltearme 22, 24 schwenkbar auf zwei nebeneinander angeordneten Zapfen 44 einer Traverse 46 gelagert. Die Haltearme 22, 24 sind um durch die Zapfen 44 definierte Schwenkachsen in seitlicher Richtung nach außen und innen schwenkbar, sie sind nach Art von Backen einer Zange schwenkbar. Durch nach außen Schwenken der Haltearme 22, 24 wird die von ihnen umgriffene Einstellöffnung 42 vergrößert, durch nach innen Schwenken verkleinert. Die Größe der von den Haltearmen 22, 24 umgriffenen Einstellöffnung 42 ist also durch Schwenken der Haltearme 22, 24 einstellbar.

Die Traverse 46 weist Lagerzapfen 48 an ihren Enden auf, die bei zusammengebautem Halter 10 drehbar in Lagerlöchern 50 in Seiten des Grundteils 14 aufgenommen sind. Die Traverse 46 ist dadurch um eine horizontale Schwenkachse schwenkbar, die an der Traverse 46 zur Seite schwenkbar gelagerten Haltearme 22, 24 sind durch Schwenken der Traverse 46 in der Höhe verstellbar, d. h. ein Abstand der Haltearme 22, 24 von der Grundplatte 12 ist einstellbar. Die Lagerzapfen 48 der Traverse 46 sind klemmend in den Lagerlöchern 50 des Grundteils 14 aufgenommen, so dass die Haltearme 22, 24 die jeweils eingestellte Höhe beibehalten.

An ihrem der Traverse 46 zugewandten Bereich weisen die Haltearme 22, 24 flügelartig zur Seite abstehende Abdeckungen 52 mit kreisförmigen Außenrändern und nach unten abstehende, zylinderförmig gerundete Blenden 54 auf. Die Abdeckungen 52 und Blenden 54 sind einstückig mit den Haltearmen 22, 24, sie decken bei zusammengebautem Halter 10 die Ausnehmung 20 im Grundteil 14 nach oben und zur Seite in Richtung der Einstellöffnung 18 hin ab (Figur 2).

Der Halter 10 weist ein Federelement 56 auf, das im dargestellten und beschriebenen Ausführungsbeispiel der Erfindung als Schraubenzugfeder ausgebildet ist. Sie wird in Einhängelöcher 58 in den Haltearmen 22, 24 eingehängt. Das Federelement 56 beaufschlagt die Haltearme 22, 24 federnd nach innen.

Seitlich nach außen an die Einstellöffnung 42 anschließend weisen die Haltearme 22, 24 einander zugewandte Steuerflächen 60 auf, die in Richtung der Traverse 46 und somit in Richtung der durch die Zapfen 44 der Traverse 46 definierten Schwenkachsen der Haltearme 22, 24 verlaufen. In Richtung der Schwenkachsen verjüngt sich ein Zwischenraum zwischen den Steuerflächen 60, die Steuerflächen 60 begrenzen einen Keilspalt zwischen sich. Bei zusammengebautem Halter 10 befindet sich ein Kugelkopf 62, der am Ende des Kugelzapfens 34 des Einstellers 32 angeordnet ist, zwischen den Steuerflächen 60 der Haltearme 22, 24. Das Federelement 56 drückt bzw. zieht die Steuerflächen 60 der beiden Haltearme 22, 24 gegen den Kugelkopf 62.

Durch Schwenken des Einstellers 32 mit dem Bedienhebel 36 wird der Kugelkopf 62 auf einer Kreisbogenbahn in Längsrichtung des Keilspalts zwischen den Steuerflächen 60 bewegt, sein Abstand von den durch die Zapfen 44 definierten Schwenkachsen der Haltearme 22, 24 ändert sich. Der Kugelkopf 62 hält den Abstand der Haltearme 22, 24 an den Angriffsstellen, also an denjenigen Stellen, an denen die Steuerflächen 60 am Kugelkopf 62 anliegen, konstant. Durch Bewegung des Kugelzapfens 62 in Richtung der Zapfen 44, also in Richtung des enger werdenden Keilspalts zwischen den Steuerflächen 60, werden die Haltearme 22, 24 auseinander geschwenkt. Bei umgekehrter Bewegung des Kugelkopfs 62 schwenken die Haltearme 22, 24 durch die Kraft des Federelements 56 nach innen. Die Größe der von den Haltearmen 22, 24 umgriffenen Einstellöffnung 42 ist somit durch Bewegen des Kugelkopfs 62 in Längsrichtung des Keilspalts zwischen den Steuerflächen 60 einstellbar.

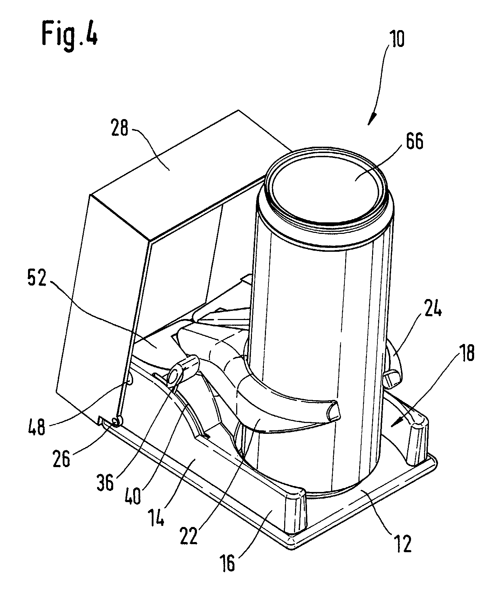

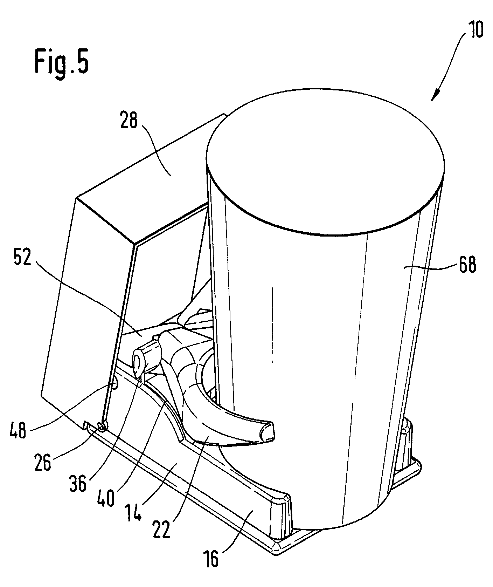

Die Bewegung des Kugelkopfs 62 erfolgt durch Verschwenken des Einstellers 32 am Bedienhebel 36. Durch Einstellung der Größe der Einstellöffnung 42 zwischen den Haltearmen 22, 24 ist der erfindungsgemäße Halter 10 an Getränkebehälter unterschiedlichen Durchmessers anpassbar, wie es in Figuren 3, 4 und 5 dargestellt ist, in denen zwei Getränkedosen 64, 66 unterschiedlichen Durchmessers (Figuren 3, 4) und ein Becher 68 (Figur 5) größeren Durchmessers in den Halter 10 eingestellt und die Größe der Einstellöffnung 42 zwischen den Haltearmen 22, 24 an den jeweiligen Getränkebehälter 64, 66, 68 angepasst ist. Durch Schwenken der Haltearme 22, 24 nach oben oder unten um die von den Lagerzapfen 48 der Traverse 46 definierte horizontale Schwenkachse ist die Einstellhöhe, in der die Haltearme 22, 24 den eingestellten Getränkebehälter 64, 66, 68 umgreifen, an die Höhe des Getränkebehälters 64, 66, 68 anpassbar.

## Patentansprüche

1. Halter für einen Getränkebehälter, mit zwei Haltearmen, die eine Einstellöffnung für den Getränkebehälter umgreifen und die zangenartig um Schwenkachsen in seitlicher Richtung schwenkbar gelagert sind, **dadurch gekennzeichnet, dass** der Halter (10) einen Einsteller (32) für eine Größe der Einstellöffnung (42) aufweist, der mit Abstand von den Schwenkachsen an den Haltearmen (22, 24) angreift und deren Abstand voneinander an den Angriffsstellen konstant hält und dessen Abstand von den Schwenkachsen der Haltearme (22, 24) einstellbar ist.

2. Halter nach Anspruch 1, **dadurch gekennzeichnet, dass** der Einsteller (32) zwischen zwei einander zugewandten Steuerflächen (60) der Haltearme (22, 24) angeordnet ist, deren Abstand voneinander sich in Richtung der Schwenkachsen der Haltearme (22, 24) ändert, und dass der Halter (10) mindestens ein Federelement (56) aufweist, das die Haltearme (22, 24) mit ihren Steuerflächen (60) gegen den Einsteller (32) drückt.

3. Halter nach Anspruch 2, **dadurch gekennzeichnet, dass** das Federelement (56) die Haltearme (22, 24) nach innen beaufschlagt.

4. Halter nach Anspruch 1, **dadurch gekennzeichnet, dass** die Haltearme (22, 24) eine Höhenverstellung (48, 50) aufweisen.

5. Halter nach Anspruch 4, **dadurch gekennzeichnet, dass** die Haltearme (22, 24) um eine horizontale Schwenkachse schwenkbar gelagert sind.
